(19)

Europäisches Patentamt
European Patent Office
Office européen des brevets

(11) **EP 4 576 741 A1**

(12) **EUROPEAN PATENT APPLICATION**

(43) Date of publication:
**25.06.2025 Bulletin 2025/26**

(21) Application number: **24218723.5**

(22) Date of filing: **10.12.2024**

(51) International Patent Classification (IPC):
**H04L 67/52** (2022.01)    **H04W 64/00** (2009.01)
**H04W 72/00** (2023.01)    **H04L 67/50** (2022.01)

(52) Cooperative Patent Classification (CPC):
**H04L 67/52; G01S 5/00; H04L 5/0048; H04W 4/02;
H04W 52/0206; H04L 67/535**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **21.12.2023  FI 20236406**

(71) Applicant: **Nokia Solutions and Networks Oy
02610 Espoo (FI)**

(72) Inventors:
• **KUMAR, Dileep**
  **Espoo (FI)**
• **TAYYAB, Muhammad**
  **Oulu (FI)**

(74) Representative: **Nokia EPO representatives
Nokia Technologies Oy
Karakaari 7
02610 Espoo (FI)**

(54) **WIRELESS POSITIONING OF A USER EQUIPMENT ON REQUEST**

(57)    According to an example aspect of the present invention, there is provided an apparatus configured to process, in a location management function, a location service request which requests that a location of a user equipment is determined, wherein the location service request comprises or is provided with at least one of the following indications: whether the request is non-mandatory, an accuracy requirement, a priority of the location service request, a class of the user equipment, a category of the user equipment, a mobility profile of the user equipment and information on previous location measurements of the user equipment, determine, based at least in part on energy saving requirements or the at least one indication, positioning reference signal characteristics to be used in the determining of the location of the user equipment, and transmit a response to the request, the response comprising indications on the determined positioning reference signal characteristics.

FIGURE 1

**Description**

FIELD

The present disclosure relates to wireless positioning.

BACKGROUND

In wireless communication systems, positioning services are used to determine geographic locations of user equipments, UEs, to facilitate various use cases such as vehicular navigation and geographic tracking, for example.

Positioning typically involves participation of the UE and plural base stations of the wireless communication system in a multilateration process to determine an estimate of the UE location.

SUMMARY

According to some aspects, there is provided the subject-matter of the independent claims. Some embodiments are defined in the dependent claims. The scope of protection sought for various embodiments of the invention is set out by the independent claims. The embodiments, examples and features, if any, described in this specification that do not fall under the scope of the independent claims are to be interpreted as examples useful for understanding various embodiments of the invention.

According to a first aspect of the present disclosure, there is provided an apparatus comprising at least one processing core and at least one memory storing instructions that, when executed by the at least one processing core, cause the apparatus at least to process, in a location management function, a location service request which requests that a location of a user equipment is determined, wherein the location service request comprises or is provided with at least one of the following indications: whether or not the location service request is conditional, whether or not the location service request is provisional, an accuracy requirement, a priority of the location service request, a user equipment class of the user equipment, a user equipment category of the user equipment, a mobility profile of the user equipment and information on previous location measurements of the user equipment, determine, based at least in part on network energy saving requirements or the at least one indication, positioning reference signal characteristics to be used in the determining of the location of the user equipment, and transmit a response to the location service request, the response comprising indications on the determined positioning reference signal characteristics.

According to a second aspect of the present disclosure, there is provided an apparatus comprising at least one processing core and at least one memory storing instructions that, when executed by the at least one processing core, cause the apparatus at least to provide to a network a location service request which requests that a location of the apparatus is determined by the network, wherein the location service request comprises or is provided with at least one of the following indications: whether or not the location service request is conditional, an accuracy requirement for the determination of the location of the apparatus, a priority of the location service request, a user equipment class of the apparatus, a user equipment category of the apparatus, a mobility profile of the apparatus or information on previous location measurements of the apparatus, and process a response to the location service request, received in the apparatus from the network, the response indicating resources for communicating positioning signals with plural base stations of the network.

According to a third aspect of the present disclosure, there is provided an apparatus comprising at least one processing core and at least one memory storing instructions that, when executed by the at least one processing core, cause the apparatus at least to: receive, from a user equipment, a location service request which requests that a location of the user equipment is determined, wherein the location service request comprises or is provided with at least one of the following indications: whether or not the location service request is conditional, an accuracy requirement, a priority of the location service request, a user equipment class of the user equipment, a user equipment category of the user equipment, a mobility profile of the user equipment and information on previous location measurements of the user equipment, determine whether the location service request is of a provisional type, and transmit the location service request to a location management service, the transmitted location service request comprising an indication of whether the transmitted location service request is of the provisional type.

According to a fourth aspect of the present disclosure, there is provided an apparatus comprising at least one processing core and at least one memory storing instructions that, when executed by the at least one processing core, cause the apparatus at least to transmit, to a location management function, a location service request which requests that a location of a user equipment is determined, wherein the location service request comprises or is provided with at least one of the following indications: whether or not the location service request is conditional, an accuracy requirement for the determination of the location of the user equipment, a priority of the location service request, a user equipment class of the user equipment, a user equipment category of the user equipment, a mobility profile of the user equipment and information on previous location measurements of the user equipment, receive a response to the location service request, the response comprising indications on positioning reference signal characteristics, determine positioning resources to be used based at least in part on the received positioning reference signal characteristics, and participate in the determining of the location of the user equipment based on the determined positioning resources.

According to a fifth aspect of the present disclosure, there is provided a method comprising providing, from an apparatus, to a network a location service request which requests that a location of the apparatus is determined by the network, wherein the location service request comprises or is provided with at least one of the following indications: whether or not the location service request is conditional, an accuracy requirement for the determination of the location of the apparatus, a priority of the location service request, a user equipment class of the apparatus, a user equipment category of the apparatus, a mobility profile of the apparatus and information on previous location measurements of the apparatus, and processing a response to the location service request, received in the apparatus from the network, the response indicating resources for communicating positioning signals with plural base stations of the network.

According to a sixth aspect of the present disclosure, there is provided a method, comprising processing, in a location management function, a location service request which requests that a location of a user equipment is determined, wherein the location service request comprises or is provided with at least one of the following indications: whether or not the location service request is conditional, whether or not the location service request is provisional, an accuracy requirement, a priority of the location service request, a user equipment class of the user equipment, a user equipment category of the user equipment, a mobility profile of the user equipment and information on previous location measurements of the user equipment, determining, based at least in part on network energy saving requirements or the at least one indication, positioning reference signal characteristics to be used in the determining of the location of the user equipment, and transmitting a response to the location service request, the response comprising indications on the determined positioning reference signal characteristics.

According to a seventh aspect of the present disclosure, there is provided a method, comprising receiving, from a user equipment, a location service request which requests that a location of the user equipment is determined, wherein the location service request comprises or is provided with at least one of the following indications: whether or not the location service request is conditional, an accuracy requirement, a priority of the location service request, a user equipment class of the user equipment, a user equipment category of the user equipment, a mobility profile of the user equipment and information on previous location measurements of the user equipment, determining whether the location service request is of a provisional type, and transmitting the location service request to a location management service, the transmitted location service request comprising an indication of whether the transmitted location service request is of the provisional type.

According to an eighth aspect of the present disclosure, there is provided a method, comprising transmitting, to a location management function, a location service request which requests that a location of a user equipment is determined, wherein the location service request comprises or is provided with at least one of the following indications: whether or not the location service request is conditional, an accuracy requirement for the determination of the location of the user equipment, a priority of the location service request, a user equipment class of the user equipment, a user equipment category of the user equipment, a mobility profile of the user equipment and information on previous location measurements of the user equipment, receiving a response to the location service request, the response comprising indications on positioning reference signal characteristics, determining positioning resources to be used based at least in part on the received positioning reference signal characteristics, and participating in the determining of the location of the user equipment based on the determined positioning resources.

According to a ninth aspect of the present disclosure, there is provided an apparatus comprising means for providing, from an apparatus, to a network a location service request which requests that a location of the apparatus is determined by the network, wherein the location service request comprises or is provided with at least one of the following indications: whether or not the location service request is conditional, an accuracy requirement for the determination of the location of the apparatus, a priority of the location service request, a user equipment class of the apparatus, a user equipment category of the apparatus, a mobility profile of the apparatus and information on previous location measurements of the apparatus, and processing a response to the location service request, received in the apparatus from the network the response indicating resources for communicating positioning signals with plural base stations of the network.

According to a tenth aspect of the present disclosure, there is provided an apparatus comprising means for processing, in a location management function, a location service request which requests that a location of a user equipment is determined, wherein the location service request comprises or is provided with at least one of the following indications: whether or not the location service request is conditional, whether or not the location service request is provisional, an accuracy requirement, a priority of the location service request, a user equipment class of the user equipment, a user equipment category of the user equipment, a mobility profile of the user equipment and information on previous location measurements of the user equipment, determining, based at least in part on network energy saving requirements or the at least one indication, positioning reference signal characteristics to be used in the determining of the location of the user equipment, and transmitting a response to the location service request, the response comprising indications on the determined positioning reference signal characteristics.

According to an eleventh aspect of the present disclosure, there is provided an apparatus comprising means for receiving, from a user equipment, a location service request which requests that a location of a user equipment is determined, wherein the location service request comprises or is provided with at least one of the following indications: whether or not the location service request is conditional, an accuracy requirement, a priority of the location service request, a user equipment class of the user equipment, a user equipment category of the user equipment, a mobility profile of the user equipment and information on previous location measurements of the user equipment, determining whether the location service request is of a provisional type, and transmitting the location service request to a location management service, the transmitted location service request comprising an indication of whether the transmitted location service request is of the provisional type.

According to a twelfth aspect of the present disclosure, there is provided an apparatus comprising means for transmitting, to a location management function, a location service request which requests that a location of a user equipment is determined, wherein the location service request comprises or is provided with at least one of the following indications: whether or not the location service request is conditional, an accuracy requirement for the determination of the location of the user equipment, a priority of the location service request, a user equipment class of the user equipment, a user equipment category of the user equipment, a mobility profile of the user equipment and information on previous location measurements of the user equipment, receiving a response to the location service request, the response comprising indications on positioning reference signal characteristics, determining positioning resources to be used based at least in part on the received positioning reference signal characteristics, and participating in the determining of the location of the user equipment based on the determined positioning resources.

According to a thirteenth aspect of the present disclosure, there is provided a non-transitory computer readable medium having stored thereon a set of computer readable instructions that, when executed by at least one processor, cause an apparatus to at least provide to a network a location service request which requests that a location of the apparatus is determined by the network, wherein the location service request comprises or is provided with at least one of the following indications: whether or not the location service request is conditional, an accuracy requirement for the determination of the location of the apparatus, a priority of the location service request, a user equipment class of the apparatus, a user equipment category of the apparatus, a mobility profile of the apparatus and information on previous location measurements of the apparatus, and process a response to the location service request, received in the apparatus from the network, the response indicating resources for communicating positioning signals with plural base stations of the network.

According to a fourteenth aspect of the present disclosure, there is provided a non-transitory computer readable medium having stored thereon a set of computer readable instructions that, when executed by at least one processor, cause an apparatus to at least process, in a location management function, a location service request which requests that a location of a user equipment is determined, wherein the location service request comprises or is provided with at least one of the following indications: whether or not the location service request is conditional, whether or not the location service request is provisional, an accuracy requirement, a priority of the location service request, a user equipment class of the user equipment, a user equipment category of the user equipment, a mobility profile of the user equipment and information on previous location measurements of the user equipment, determine, based at least in part on network energy saving requirements or the at least one indication, positioning reference signal characteristics to be used in the determining of the location of the user equipment, and transmit a response to the location service request, the response comprising indications on the determined positioning reference signal characteristics.

According to a fifteenth aspect of the present disclosure, there is provided a non-transitory computer readable medium having stored thereon a set of computer readable instructions that, when executed by at least one processor, cause an apparatus to at least receive, from a user equipment, a location service request which requests that a location of a user equipment is determined, wherein the location service request comprises or is provided with at least one of the following indications: whether or not the location service request is conditional, an accuracy requirement, a priority of the location service request, a user equipment class of the user equipment, a user equipment category of the user equipment, a mobility profile of the user equipment and information on previous location measurements of the user equipment, determine whether the location service request is of a provisional type, and transmit the location service request to a location management service, the transmitted location service request comprising an indication of whether the transmitted location service request is of the provisional type.

According to a sixteenth aspect of the present disclosure, there is provided a non-transitory computer readable medium having stored thereon a set of computer readable instructions that, when executed by at least one processor, cause an apparatus to at least transmit, to a location management function, a location service request which requests that a location of a user equipment is determined, wherein the location service request comprises or is provided with at least one of the following indications: whether or not the location service request is conditional, an accuracy requirement for the determination of the location of the user equipment, a priority of the location service request, a user equipment class of the user equipment, a user equipment category of the user equipment, a mobility profile of the user equipment and information on previous location measurements of the user equipment, receive a response to the location service request, the response comprising indications on positioning reference signal characteristics, determine positioning resources to be used based at least in part on the received positioning reference signal characteristics, and participate in the determining of the location of the user equipment based on the determined positioning resources.

BRIEF DESCRIPTION OF THE DRAWINGS

FIGURE 1 illustrates an example system in accordance with at least some embodiments of the present invention;

FIGURE 2A illustrates an example multilateration process capable of supporting at least some embodiments of the present invention;

FIGURE 2B illustrates an example location service request in accordance with at least some embodiments of the present invention;

FIGURE 2C illustrates an example location service request in accordance with at least some embodiments of the present invention;

FIGURE 3 illustrates an example apparatus capable of supporting at least some embodiments of the present invention;

FIGURE 4 illustrates signalling in accordance with at least some embodiments of the present invention, and

FIGUREs 5 - 8 are flow graphs of methods in accordance with at least some embodiments of the present invention.

EMBODIMENTS

Methods are herein described which enable obtaining a meaningful trade-off between positioning of user equipments in a cellular network on the one hand, and energy saving requirements of the cellular network on the other hand. In detail, a location service request which requests that a geographic location of a user equipment is determined may be classified as not mandatory, wherefore a location management function, LMF, may be enabled to decide whether or not to serve this request. If the LMF decides to serve the request, it may select a positioning method and/or positioning resources which consume less energy in the network than a default method and resources to accomplish the trade-off.

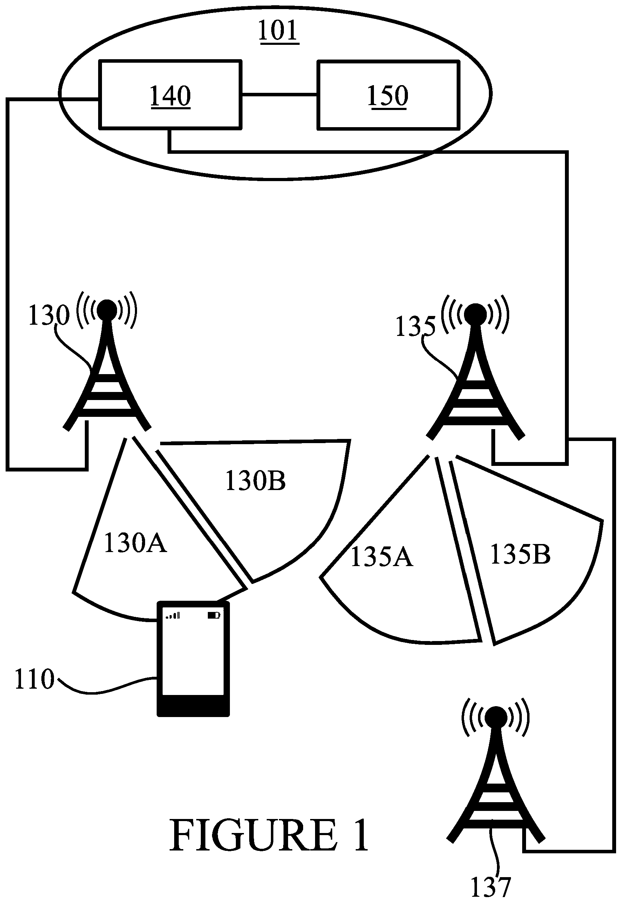

FIGURE 1 illustrates an example system in accordance with at least some embodiments of the present invention. This system includes base stations 130, 135 and 137 configured to communicate with UEs, such as UE 110. A radio link connects base station 130 with UE 110, The radio link may be bidirectional, comprising an uplink, UL, to convey information from UE 110 toward base station 130 and a downlink, DL, to convey information from the base station 130 toward UE 110. A cellular communication system may comprise hundreds or thousands of base stations, of which only three are illustrated in FIGURE 1 for the sake of clarity of the illustration. The base stations may be distributed in that they comprise a centralized unit, CU, and one or more distributed unit, DU.

Base stations may be in a normal energy state where communication with UEs is possible or in a low-energy state in which the base station does not transmit signals, or transmits signals using only a subset of its available resources, such as transceivers and/or bandwidth. A state where only a subset of transceivers are active, or only a subset of available bandwidth is used, is a partly active state. A further example of a low-energy state is a state where transmission power is limited, or where power spectral density, PSD, of transmitted signals is limited by adapting the slots occupied by signals. Thus the low-energy state may involve limiting base station function in terms of antenna, bandwidth, power and/or time. For example, in case there are no active UEs, or few active UEs, in a coverage area of any cell controlled by a base station, this base station may enter, or be instructed to enter, the low-energy state to reduce energy consumption by the network. If a UE in a coverage area of a cell controlled by such a base station then becomes active, it may transmit a wake-up signal, WUS, to this base station to trigger it to switch back to the normal energy state. On the other hand, the UE may be unable to send a wake-up signal to other base stations, such as those neighbouring the serving base station. A base station may detect a WUS using a separate low-energy receiver, for example, to enable responding to the WUS by activating a cellular transceiver of the base station.

Base station 130 is further coupled communicatively with core network node 140, which may comprise, for example, a mobility management entity, MME, or an access and mobility management function, AMF. The core network node 140 may be coupled with further core network nodes, such as location management function, LMF, 150. The system may communicate with further networks via gateways comprised in core network 101. Examples of the further core network nodes, which are not illustrated in FIGURE 1 for the sake of clarity, include subscriber information repositories and policy enforcement functions. Core network nodes may be virtualized in the sense that they may run as software modules on computing substrates, such that more than one virtualized network node may run on a same physical computing substrate. The network may be configured to function in accordance with a suitable cellular standard such as long term evolution, LTE, fifth generation, 5G, which is also known as New Radio, NR, or sixth generation, 6G standards as defined by the the 3$^{rd}$ generation partnership project, 3GPP. To obtain interoperation, UEs attaching to the network are configured to support a same standard as the network.

Base station 130 controls, in the example of FIGURE 1, cells 130A and 130B, of which UE 110 is in the situation illustrated in FIGURE 1 attached with cell 130A, and base station 135 controls, in the example of FIGURE 1, cells 135A and 135B. Base station 137 may likewise control at least one cell, these cells not being illustrated in FIGURE 1 to protect clarity of the drawing. The number of cells, or beams, may be in excess of what is illustrated in FIGURE 1. It is also possible that a base station has a single cell or beam. While illustrated as sector-shaped, cells of a same base station may be omnidirectional and operate on different frequencies, for example. A mobility event may comprise a switch from one beam to another beam of the same cell, or a switch from one cell to another cell. To support mobility procedures, UEs, including UE 110, are configured to conduct mobility measurements to measure signal strengths of adjacent beams and/or cells, and report results of these measurements to the network, which may then take a decision concerning a mobility event, such as a beam change or a cell switch. Initially, in the situation of FIGURE 1, base stations 135 and 137 are in the low-energy state, that is, partially or fully switched off, to conserve energy use of the network.

In order to realize cellular positioning techniques, a positioning reference signal, PRS, needs to be transmitted and received over the cellular interfaces either in the uplink or the downlink. Many positioning methods are based on differential techniques, that is, multilateration, where offsets or errors are mitigated by using a difference of measurements of multiple, at least three, reference points.

A UE may transmit a wake-up signal, WUS, to a serving base station of the UE to trigger a switch of the serving base station from the low-energy state to the normal energy state where the serving base station can receive and transmit normal cellular signals. While this is useful for initiating communication from the UE, if the UE needs positioning sending a WUS to the serving base station may be insufficient if other nearby base stations, needed in positioning of the UE, are in the low-energy state. Waking the base stations from the low-energy state, while useful for positioning of UEs, increases energy consumption in the network and the base stations have been configured into the low-energy state to conserve energy. Further, as noted above, the UEs may be unable to provide a wake-up signal to more than one base station. In 6G and beyond, the network is expected to have many types of low-complexity and small form factor UEs, including reduced capacity, RedCap, ambient Internet of Things, IoT and cellular IoT UEs. For such low-priority devices, or even for normal devices with low-priority use cases, waking up the base stations could be inefficient from a network energy consumption point of view. A balance should therefore be struck between positioning UEs and conserving energy.

Parameter selection for the PRS plays a key role in the achievable positioning accuracy of a UE and power consumption in the network. As an example, increasing the sounding bandwidth, BW, of the PRS, in general, results in better time location estimates, that is, due to higher temporal resolution. Similarly, increasing the number of antenna elements, Nt, results in better angle estimates, that is, due to higher angular resolution and better achievable signal-to-noise ratio, SINR, conditions. However, this reduces energy savings in the network since using more antenna elements, and using more bandwidth for the PRS, consumes more energy.

To enable this trade-off to be made in a meaningful manner, the location service request may be furnished with an indicator which informs network nodes whether the request is mandatory or whether the network may consider whether or not to serve the request. For example, the request may comprise an indication that the request has low priority, wherefore the network may choose to deny or ignore the request if energy saving requirements are strict and at least one, or at least two, base stations would need to be switched from the low-energy state to the normal energy state to serve the request. Likewise, the request may comprise an indication the request is conditional, for example it may contain or relate to a condition concerning a number of participating base stations being not in the low-energy state, or a frequency of location service requests exceeds a threshold. Yet further, the indication may indicate the location service request is provisional, meaning the network need not act on the request unless it is confirmed separately. As one example, the location service request may comprise a single bit indicating whether the request is mandatory or not.

Thus two basic options unfold, firstly, a LMF handing the location service request may decide to not serve the request, in case the request indicates that serving it is not mandatory. For example, if the request indicates it is of low priority and the LMF determines that serving the request would require awakening at least two base stations from the low-energy state, the LMF may deny or ignore the request. Similarly, if the request indicates it is conditional and the frequency of incoming location service requests to the LMF is below a threshold, the LMF may deny or ignore the request. Likewise if the priority is indicated in the request as being low and the UE is determined to move only slowly, the LMF may deny or ignore the request.

Secondly, the LMF may decide to serve the request, for example if the request indicates that serving it is mandatory, that is, it is not a low-priority or conditional request. Also if the request has a low priority indication but serving it would not require switching any base stations from the low-energy state, that is, the needed base stations are already active, the LMF may decide to serve the request. The LMF may determine positioning reference signal characteristics which use less physical resources when the request has low priority, than when the request has normal or high priority. As another example, the LMF may choose to serve a non-mandatory request if serving it would consume only little energy in the network, for example if the amount of energy needed to serve the request is below a threshold. Further, if the request indicates it is conditional but the frequency of incoming location service requests is more than the threshold, the LMF may choose to serve the request.

One way to implement the frequency threshold in conditional requests is to determine if, when the LMF receives the location service requests, there is at least one location service request already received but not served, such that a UE which sent the not served location service request is still waiting for a response to this request. For example, the already received but not yet server request may be a conditional request, and the condition for its serving has not been met. The LMF may be configured with a timer value the UE uses to wait for a reply before considering the location service request to have been lost or ignored by the network. Non-mandatory location service requests may be associated with a UE timer which is longer than in the case of mandatory location service requests. In this case, the LMF may choose to serve both the waiting request and the newly arrived request, as two requests can then be served at the cost of awaking at least one base station only once.

In case the LMF chooses to serve the request, the LMF may be configured to define for the positioning process resources, these being positioning reference signal characteristics, which are to be used in serving the request, taking into account energy saving requirements in the network. The LMF, or another node performing location management functions, may be configured to select resources which are sufficient to determine the location of the UE at an accuracy required in the request, or at an accuracy requirement the LMF determines using another method, and not much more. In other words the LMF may be configured to select the quantity of positioning resources based on an accuracy requirement pertaining to the location service request, such that a request with a less stringent accuracy requirement is given less resources and a request with a more stringent accuracy requirement is given more resources. Using less resources conserves energy but does not enable the determination of the location of the UE with as great an accuracy as is possible using more resources.

In detail, the LMF may determine, concerning location service requests that is decides to serve, in dependence of the network energy saving configuration and the accuracy requirement, a positioning method, UL or DL, and a PRS parameter set $\{S_a, S_f, S_p, S_t\}$, each of which may be selected from between zero and one, with one indicating use of all available resources of the type. Here $S_a$ is the fraction of transceiver units which are active, $S_f$ is a fraction of the total usable bandwidth which is to be used in the positioning process, $S_p$ is the ratio of power spectral density during transmission of PRS, and St is a fraction of active transmit/receive state in time domain. In some embodiments, the parameter set determined by the LMF is $\{S_a, S_f, S_p, S_t\}$. The determined parameter set may be considered to be PRS characteristics. In some embodiments, Sf is the only PRS characteristic selected by the LMF, with other parameters being an achievable positioning accuracy may be estimated as

$$\sigma^{ToA} \geq \frac{c}{2\sqrt{2}\pi\sqrt{SINR}(S_f.BW)}$$

where c is the speed of light and SINR is computed using a link-budget model. From the equation above we see that the noise variance of time-based positioning measurements is inversely proportional to sounding bandwidth. However, power consumption is directly proportional to the sounding bandwidth, used to communicate the PRS. The same relations apply also to the fraction of active transceiver units to power consumption. The following tables illustrates energy savings achievable using the herein disclosed system when positioning resources $S_f$ and $S_a$ are selected as less than the maximum amount:

| Positioning requirements [m] | Legacy System | Herein disclosed system | | |
|---|---|---|---|---|
| | DL Power Consumption [Normalized] | Parameter tuning, $S_f$ | DL Power consumption [Normalized] | Network energy saving gains [%] |
| ~3 | 32 | 0.1 | 17.6900 | 44.7187 |
| ~2 | 32 | 0.22 | 19.6974 | 38.4456 |

| Positioning requirements [m] | Legacy System | Herein disclosed system | | |
|---|---|---|---|---|
| | DL Power Consumption [Normalized] | Parameter tuning, $S_a$ | DL Power consumption [Normalized] | Network energy saving gains [%] |
| ~3 | 32 | 0.3125 (20 TRX) | 13.7812 | 56.9336 |
| ~2 | 32 | 0.4688 (30 TRX) | 17.9219 | 43.9941 |

While results are from specific test cases, other cases may scale differently. However, the gist of the idea relating to parameter use in positioning to accomplish energy saving in the network holds across test cases. For example, location service requests pertaining to determining a location of a stationary or semi-stationary UE, or an ambient IoT UE, may be classified as non-mandatory, for example low-priority, requests. This classification of the request may be performed by the UE or AMF which compiles the location service request, or by the LMF which handles the request. This is so, since a stationary UE does not move around a lot and has a fairly constant location, wherefore it may well be that there is no urgency in determining what the location is. A stationary or semi-stationary UE may be a UE which fails to satisfy a mobility criterion, for example. This may be based on historical location data, or it may be inherent in the type of the UE, for example an IoT UE which is fixedly installed in a building or pipeline is not expected to move at all. On the other hand, as one example case of non-stationary UEs, a location service request may be defined to be conditional, or otherwise non-mandatory, exploiting information locally available at a UE which compiles the location service request. To determine whether the UE is stationary or semi-stationary, the network may configure the UE to perform sensor measurements, such as pedometer, accelerometer of barometer measurements, and further instruct the UEs to store such statistical information to be used as a reference when compiling location service requests.

In some embodiments, UEs with limited mobility include wearable devices with pedestrian speed, such as 3 km/hour. Here a positioning accuracy requirement may be set at 10 metres, for example. As an example, if the moving distance from time $t_1$ to $t_2$ is expected to be less than 10m, then this positioning session may be initiated in the UE with low priority, or may be assigned a low priority in AMF or LMF. Likewise, the AMF or LMF may be configured to change an accuracy requirement in a location service request based on knowledge of the mobility of a UE that the request pertains to. For example, if the UE is known to be fairly mobile, such as moving faster than a velocity threshold, the accuracy requirement may be relaxed, such that the LMF may assign fewer positioning resources to serving the request, which saves energy in the network. On the other hand if the request relates, for example, to an autonomous vehicle, the accuracy requirement may be set to a high, or even maximum, level to enhance road safety.

In some embodiments, The AMF of a connected UE determines the need for mandatory or non-mandatory location service requests. In these cases, the UE may send the location service request to the AMF without the indicator relating to mandatory or non-mandatory nature of the request. For example, based on the UE class and category information, available or acquired statistical information of current previous slots, the AMF may determines a need to locate the UE with an indicator in the location service request set to indicate a high-priority, mandatory request. Alternatively, a low priority, non-mandatory indicator may be set in the request. The request as so configured may then be submitted from AMF to LMF. An advantage of the AMF setting the indicator in the location service request is that it simplifies UE implementation for, e.g., ambient IoT, 6G IoT use cases.

The network may define threshold values $\delta_{th}$ which may be based, for example, on at least one performance indicator of network energy saving and positioning accuracy requirements. If $|P(t_1) - P(t_2)| \geq \delta_{th}$ then a location service request may be classified as non-mandatory, for example. Here $P(t_1)$ and $P(t_2)$ are an absolute or relative position of the device at time $t_1$ and $t_2$, respectively. On the other hand, in case the location service request relates to a critical application, such as an emergency call, autonomous vehicle or vehicular crash report, the location service request may be assigned a mandatory indication, and/or the accuracy requirement may be set to a higher level than otherwise.

In case the LMF determines to not serve a non-mandatory location service request, it may send a message to the node which originated the request, such as the UE or the AMF. This message informs the node of the denial, and the message may comprise an indication of a time. The time indicates a length of time during which the node may not initiate a new location service request concerning the same UE. The time indication may be selected in a UE-specific manner to enable controlling of UEs, for example the indicated time may be selected to be a longer time in case the specific UE concerned transmits too many location service requests, for example by sending such requests more frequently than a frequency threshold. The positioning reference signal characteristics provided by the LMF may indicate a reduced energy consumption, for example by specifying that less than all available resources are to be used in communicating the PRS. The network may prioritize, for example in the PRS characteristics, a time-based positioning method and/or an angle-based positioning method in dependence of UE positioning requirements and NW energy consumption parameters. The LMF may be configured to select, based at least in part on an accuracy requirement in the request and on an energy saving requirement, a positioning method to be used in the determining of the location of the user equipment. The LMF may also be configured to select which low-energy base station(s) to wake up based on the accuracy requirement and a network energy saving requirement.

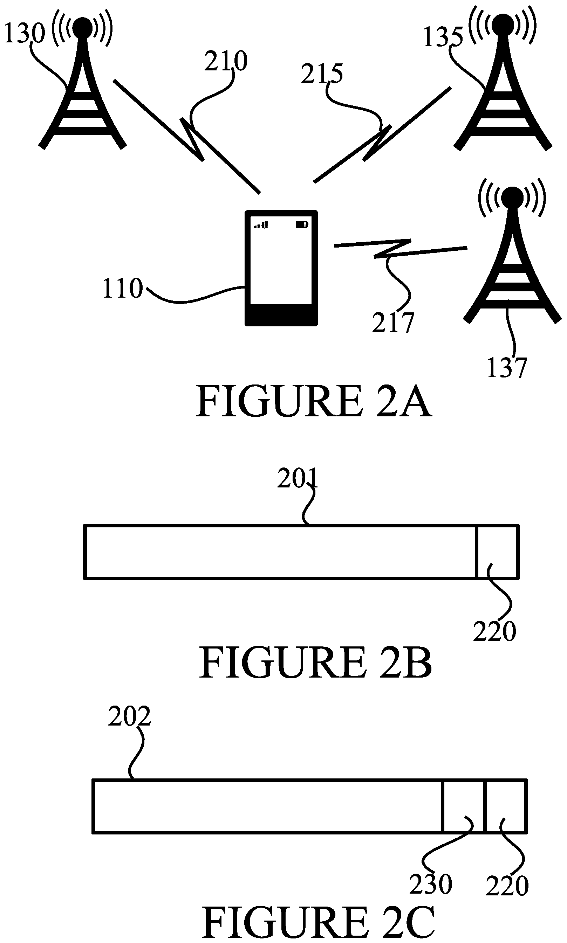

FIGURE 2A illustrates an example multilateration process capable of supporting at least some embodiments of the present invention. Like numbering denotes like structure as in FIGURE 1. In detail, in the multilateration process wireless transmissions between UE 110 and base stations 130, 135 and 137 are present as transmissions 210, 215 and 217, respectively, as illustrated. While three participating base stations are illustrated in FIGURE 2A, the process is not limited thereto, rather, more than three base stations may be configured to participate in the multilateration process. Transmissions 210, 215 and 217 are transmissions of a PRS.

In the multilateration process, either base stations 130, 135, 137 transmit and UE 110 receives, or UE 110 transmits and base stations 130, 135, 137 receive. The receiving node records precise receive times of the signal(s) it receives as part of the multilateration process, enabling solving the location of UE 110. When the UE 110 is the node transmitting in the multilateration process, the location determining method is an uplink, UL, method. When the base stations transmit in the multilateration process, the location determining method is a downlink, DL, method. When UE 110 is the receiving node, it may report information concerning measurements it has performed on transmissions 210, 215, 217 and report them to the network, such as to the LMF, for analysis and determination of the location of UE 110. Of interest in network energy saving is that the UL method conserves some energy in the network side, since it consumes less energy in the base station to receive than to transmit. When transmitting the positioning reference signal in the multilateration process, a positioning reference signal configuration received in the transmitting node is used. As is herein described, the LMF may determine to use less than all available resources, such as bandwidth, in the multilateration process to conserve energy. The LMF may indicate the selected method to the UE in a response to the location service request.

FIGURE 2B illustrates an example location service request in accordance with at least some embodiments of the present invention. The location service request 201 comprises an indication 220 whether location service request 201 is mandatory or non-mandatory. For example, indication 220 may be an indication whether the request is or is not mandatory outright, or indication 220 may comprise an indication of one or more of the following: whether or not the location service request is conditional, whether or not the location service request is provisional, a priority of the location service request, a user equipment class of the user equipment, a user equipment category of the user equipment, a mobility profile of the user equipment and information on previous location measurements of the user equipment. The priority may indicate either a normal priority or a reduced priority, for example. The indication of conditionality may indicate the request is conditional or that the request is not conditional. The indication the request is or is not provisional may indicate the request is provisional or that the request is not provisional. Yet further, statistical information concerning current or previous measurement slots assigned to the UE may be used to classify the request as non-mandatory.

A UE class may comprise, for example, a power class of the UE indicating a maximum transmit power of the UE. A UE category may indicate an extent of multiple input multiple output, MIMO, operation the UE is configured to support, such as a number of MIMO layers the UE supports. A higher number of MIMO layers results in a larger data throughput. A mobility profile of the UE may indicate a speed at which the UE is moving, and optionally also a speed at which the UE was moving at a point in the past as well.

FIGURE 2C illustrates an example location service request in accordance with at least some embodiments of the present invention. Location service request 202 comprises, in addition to indication 220, also an indication 230 of an accuracy requirement of request 202. For example, the accuracy requirement may be that the location of the UE is requested to be determined at an accuracy of one meter, five meters, ten meters of fifty meters, for example.

As described herein above, a location service request may be non-mandatory in the sense that it is conditional, provisional or it has a low priority. In some embodiments, a location service request is labeled as non-mandatory, causing the system to treat it as having low priority. For example, a UE may include in a location service request at least one of: the indication whether or not the location service request is conditional or the indication of the priority of the location service request.

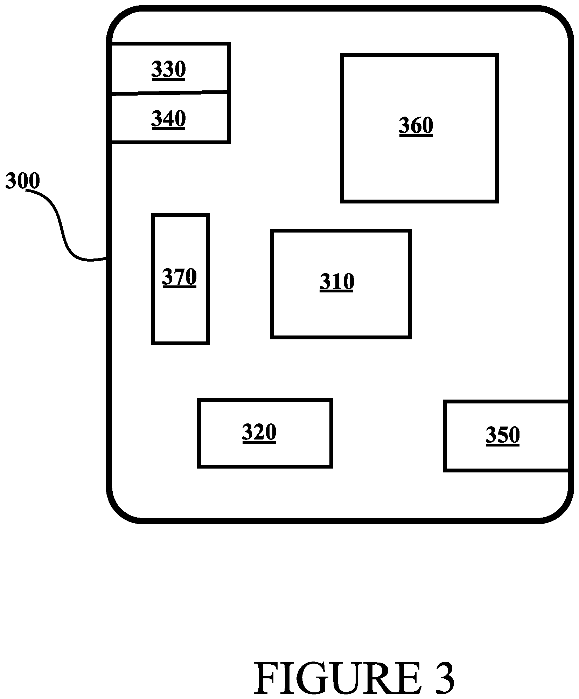

FIGURE 3 illustrates an example apparatus capable of supporting at least some embodiments of the present invention. Illustrated is device 300, which may comprise, for example, a UE 110 or, in applicable parts, and AMF 140 or LMF 150 of FIGURE 1. Comprised in device 300 is processor 310, which may comprise, for example, a single- or multi-core processor wherein a single-core processor comprises one processing core and a multi-core processor comprises more than one processing core. Processor 310 may comprise, in general, a control device. Processor 310 may comprise more than one processor. When processor 310 comprises more than one processor, device 300 may be a distributed device wherein processing of tasks takes place in more than one physical unit. Processor 310 may be a control device. A processing core may comprise, for example, a Cortex-A8 processing core manufactured by ARM Holdings or a Zen processing core designed by Advanced Micro Devices Corporation. A processing core or processor may be, or may comprise, at least one qubit. Processor 310 may comprise at least one Qualcomm Snapdragon and/or Intel Atom processor. Processor 310 may comprise at least one application-specific integrated circuit, ASIC. Processor 310 may comprise at least one field-programmable gate array, FPGA. Processor 310, optionally together with memory and computer instructions, may be means for performing method steps in device 300, such as processing, determining, transmitting, activating, selecting, providing, including, receiving or participating. Processor 310 may be configured, at least in part by computer instructions, to perform actions.

Device 300 may comprise memory 320. Memory 320 may comprise random-access memory and/or permanent memory. Memory 320 may comprise at least one RAM chip. Memory 320 may be a computer readable medium. Memory 320 may comprise solid-state, magnetic, optical and/or holographic memory, for example. Memory 320 may be at least in part accessible to processor 310. Memory 320 may be at least in part comprised in processor 310. Memory 320 may be means for storing information. Memory 320 may comprise computer instructions that processor 310 is configured to execute. When computer instructions configured to cause processor 310 to perform certain actions are stored in memory 320, and device 300 overall is configured to run under the direction of processor 310 using computer instructions from memory 320, processor 310 and/or its at least one processing core may be considered to be configured to perform said certain actions. Memory 320 may be at least in part external to device 300 but accessible to device 300. Memory 320 may be transitory or non-transitory. The term "non-transitory", as used herein, is a limitation of the medium itself (that is, tangible, not a signal) as opposed to a limitation on data storage persistency (for example, RAM vs. ROM).

Device 300 may comprise a transmitter 330. Device 300 may comprise a receiver 340. Transmitter 330 and receiver 340 may be configured to transmit and receive, respectively, information in accordance with at least one cellular or non-cellular standard. Transmitter 330 may comprise more than one transmitter. Receiver 340 may comprise more than one receiver. Transmitter 330 and/or receiver 340 may be configured to operate in accordance with global system for mobile communication, GSM, wideband code division multiple access, WCDMA, 5G, long term evolution, LTE, IS-95, wireless local area network, WLAN, Ethernet and/or worldwide interoperability for microwave access, WiMAX, standards, for example.

Device 300 may comprise a near-field communication, NFC, transceiver 350. NFC transceiver 350 may support at least one NFC technology, such as NFC, Bluetooth, Wibree or similar technologies.

Device 300 may comprise user interface, UI, 360. UI 360 may comprise at least one of a display, a keyboard, a touchscreen, a vibrator arranged to signal to a user by causing device 300 to vibrate, a speaker or a microphone. A user may be able to operate device 300 via UI 360, for example to accept incoming telephone calls, to originate telephone calls or video calls, to browse the Internet, to manage digital files stored in memory 320 or on a cloud accessible via transmitter 330 and receiver 340, or via NFC transceiver 350, and/or to play games.

Device 300 may comprise or be arranged to accept a user identity module 370. User identity module 370 may comprise, for example, a subscriber identity module, SIM, card installable in device 300. A user identity module 370 may comprise information identifying a subscription of a user of device 300. A user identity module 370 may comprise cryptographic information usable to verify the identity of a user of device 300 and/or to facilitate encryption of communicated information and billing of the user of device 300 for communication effected via device 300.

Processor 310 may be furnished with a transmitter arranged to output information from processor 310, via electrical leads internal to device 300, to other devices comprised in device 300. Such a transmitter may comprise a serial bus transmitter arranged to, for example, output information via at least one electrical lead to memory 320 for storage therein. Alternatively to a serial bus, the transmitter may comprise a parallel bus transmitter. Likewise processor 310 may comprise a receiver arranged to receive information in processor 310, via electrical leads internal to device 300, from other devices comprised in device 300. Such a receiver may comprise a serial bus receiver arranged to, for example, receive information via at least one electrical lead from receiver 340 for processing in processor 310. Alternatively to a serial bus, the receiver may comprise a parallel bus receiver.

Device 300 may comprise further devices not illustrated in FIGURE 3. For example, where device 300 comprises a smartphone, it may comprise at least one digital camera. Some devices 300 may comprise a back-facing camera and a front-facing camera, wherein the back-facing camera may be intended for digital photography and the front-facing camera for video telephony. Device 300 may comprise a fingerprint sensor arranged to authenticate, at least in part, a user of device 300. In some embodiments, device 300 lacks at least one device described above. For example, some devices 300 may lack a NFC transceiver 350 and/or user identity module 370.

Processor 310, memory 320, transmitter 330, receiver 340, NFC transceiver 350, UI 360 and/or user identity module 370 may be interconnected by electrical leads internal to device 300 in a multitude of different ways. For example, each of the aforementioned devices may be separately connected to a master bus internal to device 300, to allow for the devices to exchange information. However, as the skilled person will appreciate, this is only one example and depending on the embodiment various ways of interconnecting at least two of the aforementioned devices may be selected without departing from the scope of the present invention.

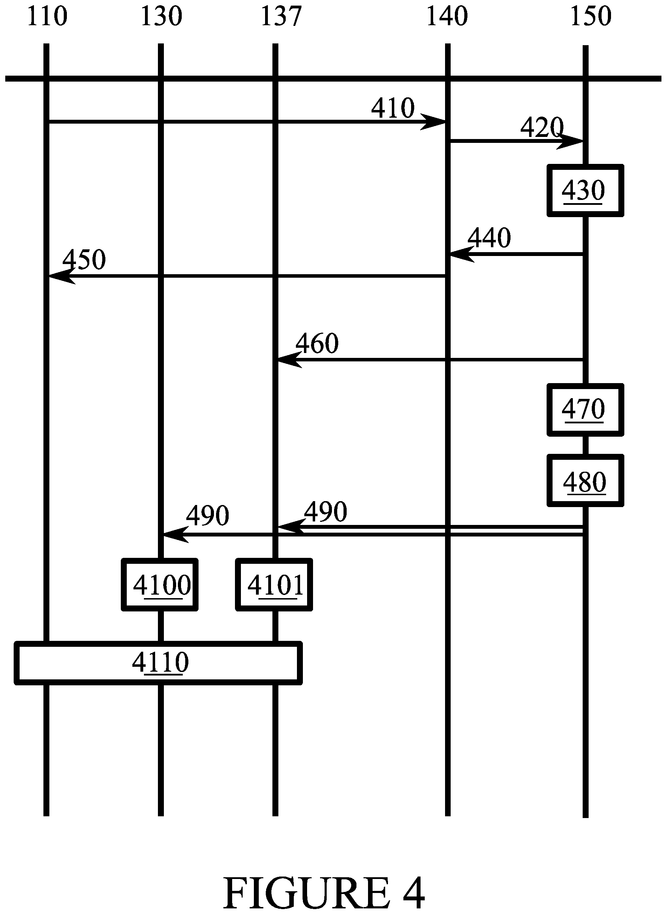

FIGURE 4 illustrates signalling in accordance with at least some embodiments of the present invention. On the vertical axes are disposed, from the left to the right, UE 110, base station 130, base station 137, AMF 140 and LMF 150, each as illustrated in FIGURE 1. Time advances from the top toward the bottom.

In phase 410, UE 110 initiates a location service request and provides this request to AMF 140, which forwards it to LMF 150 in phase 420. The UE may transmit the location service request to the serving base station, which then transmits the request onward to the LMF, optionally via the AMF. Alternatively, the process may begin by AMF 140 initiating the location service request by generating the request awhichnd transmitting it to LMF 150. The location service request of phase 410, where present, and phase 420 comprises an indication that it is a non-mandatory request, as discussed herein above. In some embodiments, the AMF determines a need to localize the UE based on, for example, the UE class and UE category information, optionally combined with statistical information of current or previous slots. The AMF may, in particular, receive, from the UE, the location service request and determine whether the location service request is provisional in nature. This determination may be based on the UE class and category information, available/acquired statistical information of current previous slots, for example. For example, if the UE class or category indicate the UE is stationary or slow-moving, the location service request may be determined to be provisional in nature. On the other hand if the location service request relates to an emergency use case, for example, the AMF may determine it is not provisional in nature. The AMF may then label the location service request as provisional or not provisional in nature before transmitting the location service request to the LMF. In these embodiments, the request the AMF receives from the UE in phase 410 may lack an indication of mandatory or non-mandatory nature.

In phase 430 LMF 150 processes the request received by LMF 150 in phase 420. For example, LMF 150 may employ threshold values stored or otherwise accessible to the LMF 150, a tradeoffs between UE 110 positioning and network energy consumption. Further, in case the request comprises an accuracy requirement, LMF 150 may determine whether a positioning process may be carried out which complies with both the accuracy requirement and network energy consumption limits. LMF 150 may employ in the processing of phase 430 information on base stations which would be needed in the positioning process, in particular LMF 150 may consider whether one or more of these base stations are in the low-energy state. Waking a base station from the low-energy state to participate in a positioning process consumes more energy than directing an already active base station to participate in a positioning process.

LMF 150 may determine a quantity of energy that serving the location service request would consume in the network, and employ a look-up table or other function to enable comparing compare this quantity of energy to a benefit obtainable from the requested positioning process. A priority level of the request, a priority of the subscriber, and/or a priority level of an application requesting the positioning may affect a quantity of energy that is acceptable to use in serving the request. If LMF 150 determines that the quantity of energy is acceptable to use in serving the request, processing advances to phase 460.

However, if LMF 150 determines that the quantity of energy needed to serve the request is in excess of that the network is willing to use for this request, processing advances to phase 440. For example, the request may be an isolated non-mandatory request, such that no other UE is waiting for a response to its LMF request which would involve the same low-energy state base station(s). In phase 440 LMF 150 transmits to AMF a denial message, informing the AMF that the request of phase 420 has been refused. This denial message may comprise a timer value indicating a length of time, during which a new location service request concerning the same UE may not be submitted. AMF 140 may be configured to store and observe this timer value, and discard or refuse further location service requests it receives concerning UE 110 before expiry of the time.

In phase 450, AMF 140 informs UE 110 of the refusal of the location service request in case the UE had initiated the request, optionally also informing the UE of the timer value, such that the UE will know to not send new location service requests too soon once it processes the response it receives from the AMF. In some embodiments the timer value pertains only to non-mandatory requests, and the UE may override the timer value in case an emergency call, or other high-priority need, arises.

On the other hand in case LMF 150 decides to serve the request received in phase 420, processing advances from phase 430 to phase 470, where the LMF determines, whether PRS or sounding reference signal, SRS, resources are to be adapted to decrease network energy usage in serving the request. In particular, LMF 150 may determine resources which enable meeting an accuracy requirement of the request, while using less than maximum or default resources. For example, only a part of a usable bandwidth may be allocated by the LMF, and/or fewer than all antenna ports may be allocated by the LMF into positioning resources to use. The LMF may be configured to determine less than the maximum or default resources as a response to the location service request being non-mandatory in nature and a decision by the LMF to serve this non-mandatory request.

Subsequently, in phase 480, the LMF determines positioning resource signal characteristics for each participating base station. The LMF may also, in this phase or in phase 470, select a positioning method to use in serving the request received in phase 420. For example, an uplink method may be used to conserve energy in the network, as a response to the request being non-mandatory in nature. On the other hand if the request is mandatory in nature, the downlink method may be selected. The LMF may indicate the selected method to the UE in a response to the location service request.

In phase 490, LMF 150 configures the base stations that are to participate in the positioning process by transmitting the positioning resource characteristics determined in phases 470 and 480, the base stations receiving this configuration. In the case of base stations that are to participate in the positioning process which are in the low-energy state, phase 490 comprises LMF 150 waking these base stations up into a state where they can participate in the positioning process with UE 110.

In phase 4100, base station 130 determines which resources of the cell it controls are to be used in the positioning process. This determination is based on the information received in base station 130 in phase 490. Base station 137 performs a similar process in phase 4101, and other base stations which are to participate in the positioning process, will act similarly. In general, at least three base stations may be configured by LMF 150 to participate in the positioning process. In some cases, at least three distributed units, DUs, of one or more base station participate in the positioning process in case the DUs are sufficiently far apart to produce sufficiently meaningful information for the positioning process. Subsequently, in phase 4110, the UE and participating base stations conduct the positioning process. Implicit in phase 4110 is that the UE has received and processed a response to the location service request.

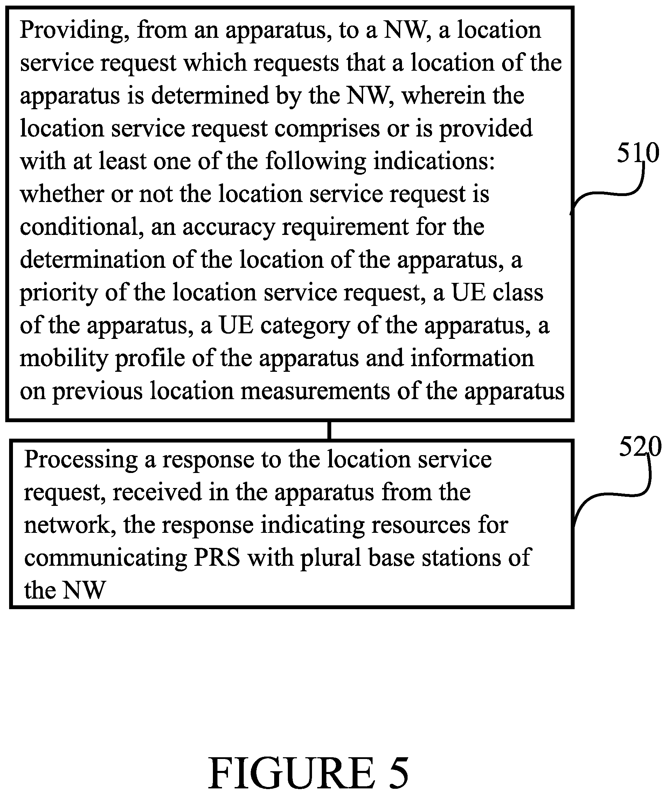

FIGURE 5 is a flow graph of a method in accordance with at least some embodiments of the present invention. The phases of the illustrated method may be performed in UE 110, for example, or in a control device configured to control the functioning thereof, when installed therein.

Phase 510 comprises providing, from an apparatus, to a network a location service request which requests that a location of the apparatus is determined by the network, wherein the location service request comprises or is provided with at least one of the following indications: whether or not the location service request is conditional, an accuracy requirement for the determination of the location of the apparatus, a priority of the location service request, a user equipment class of the apparatus, a user equipment category of the apparatus, a mobility profile of the apparatus and information on previous location measurements of the apparatus. Phase 520 comprises processing a response to the location service request, received in the apparatus from the network, the response indicating resources for communicating positioning signals with plural base stations of the network.

The method of FIGURE 5 may comprise including in the location service request at least one of: the indication whether or not the location service request is conditional or the indication of a priority of the location service request.

The method of FIGURE 5 may be one wherein the response to the location service request indicates the request has been denied, and the response comprises an indication of a length of time, during which the apparatus may not send a new location service request, and wherein the method comprises abstaining from sending the new location service request until the length of time has elapsed.

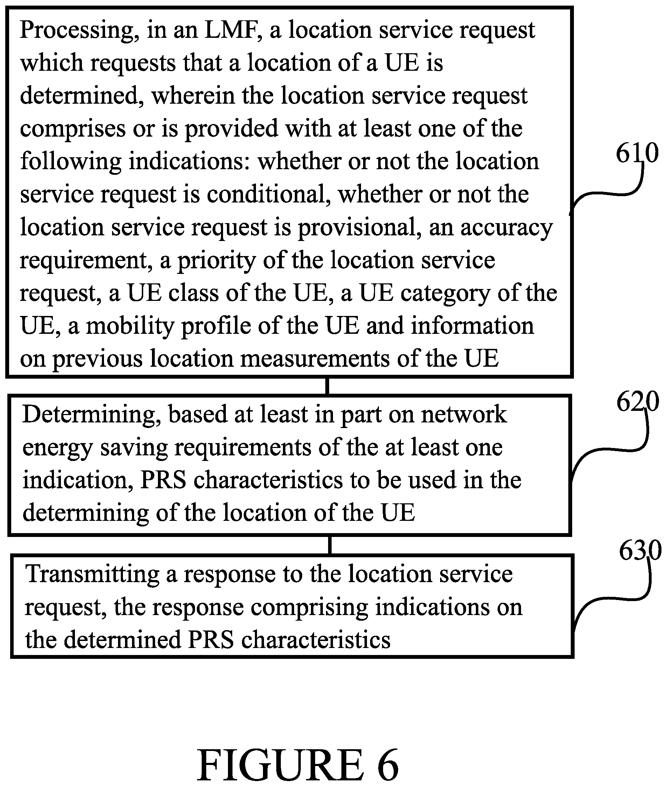

FIGURE 6 is a flow graph of a method in accordance with at least some embodiments of the present invention. The phases of the illustrated method may be performed in an LMF 150, for example, or in a control device configured to control the functioning thereof, when installed therein.

Phase 610 comprises processing, in a location management function, a location service request which requests that a location of a user equipment is determined, wherein the location service request comprises or is provided with at least one of the following indications: whether or not the location service request is conditional, whether or not the location service request is provisional, an accuracy requirement, a priority of the location service request, a user equipment class of the user equipment, a user equipment category of the user equipment, a mobility profile of the user equipment and information on previous location measurements of the user equipment. Phase 620 comprises determining, based at least in part on network energy saving requirements or the at least one indication, positioning reference signal characteristics to be used in the determining of the location of the user equipment. Phase 630 comprises transmitting a response to the location service request, the response comprising indications on the determined positioning reference signal characteristics.

The method of FIGURE 6 may be one wherein the location service request comprises the accuracy requirement and where the method further comprises determining the positioning reference signal characteristics further based on the accuracy requirement.

The method of FIGURE 6 may comprise activating at least one base station from a low-energy state responsive to determining to initiate the positioning procedure, and instructing the activated at least one base station to participate in the positioning procedure.

The method of FIGURE 6 may comprise selecting the at least one base station to activate from the low-energy state based on the accuracy requirement and the network energy saving requirements.

The method of FIGURE 6 may be one wherein the response further comprises an indication of a preferred positioning method to use in the determination of the location of the user equipment.

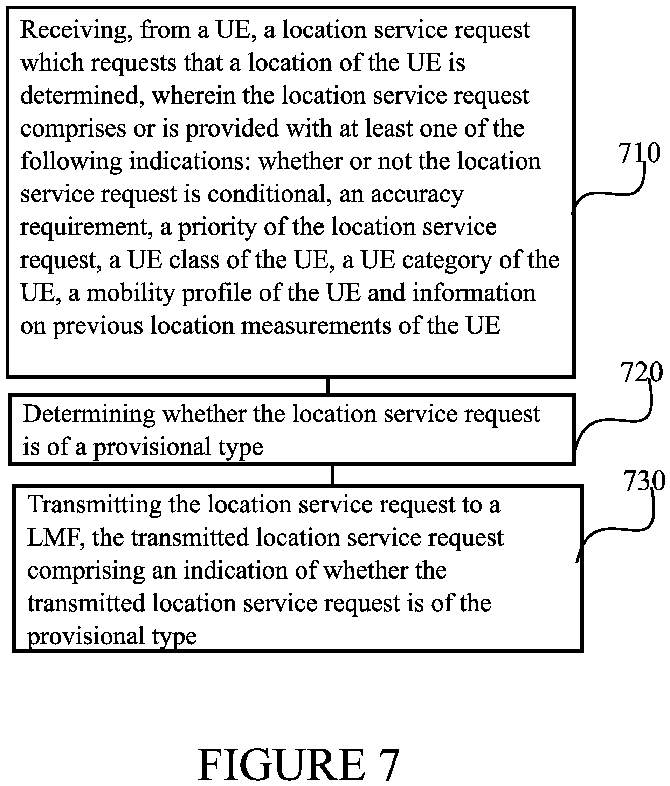

FIGURE 7 is a flow graph of a method in accordance with at least some embodiments of the present invention. The phases of the illustrated method may be performed in an AMF 140, for example, or in a control device configured to control the functioning thereof, when installed therein.

Phase 710 comprises receiving, from a user equipment, a location service request which requests that a location of the user equipment is determined, wherein the location service request comprises or is provided with at least one of the following indications: whether or not the location service request is conditional, an accuracy requirement, a priority of the location service request, a user equipment class of the user equipment, a user equipment category of the user equipment, a mobility profile of the user equipment and information on previous location measurements of the user equipment. Phase 720 comprises determining whether the location service request is of a provisional type. Phase 730 comprises transmitting the location service request to a location management service, the transmitted location service request comprising an indication of whether the transmitted location service request is of the provisional type.

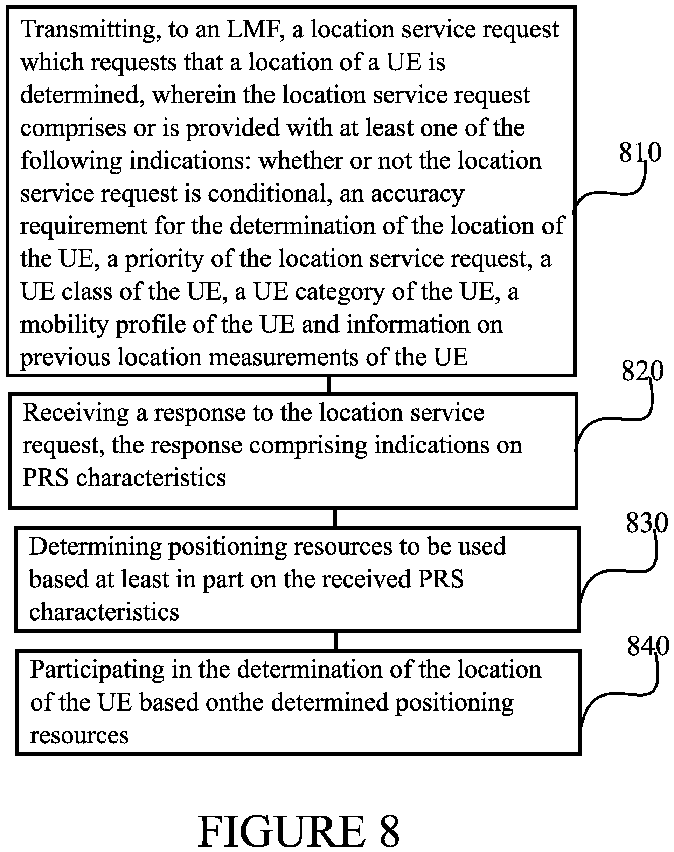

FIGURE 8 is a flow graph of a method in accordance with at least some embodiments of the present invention.

The phases of the illustrated method may be performed in a serving base station 130, for example, or in a control device configured to control the functioning thereof, when installed therein.

Phase 810 comprises transmitting, to a location management function, a location service request which requests that a location of a user equipment is determined, wherein the location service request comprises or is provided with at least one of the following indications: whether or not the location service request is conditional, an accuracy requirement for the determination of the location of the user equipment, a priority of the location service request, a user equipment class of the user equipment, a user equipment category of the user equipment, a mobility profile of the user equipment and information on previous location measurements of the user equipment. Phase 820 copmrises receiving a response to the location service request, the response comprising indications on positioning reference signal characteristics. Phase 830 comprises determining positioning resources to be used based at least in part on the received positioning reference signal characteristics. Phase 840 comprises participating in the determining of the location of the user equipment based on the determined positioning resources.

It is to be understood that the embodiments of the invention disclosed are not limited to the particular structures, process steps, or materials disclosed herein, but are extended to equivalents thereof as would be recognized by those ordinarily skilled in the relevant arts. It should also be understood that terminology employed herein is used for the purpose of describing particular embodiments only and is not intended to be limiting.

Reference throughout this specification to one embodiment or an embodiment means that a particular feature, structure, or characteristic described in connection with the embodiment is included in at least one embodiment of the present invention. Thus, appearances of the phrases "in one embodiment" or "in an embodiment" in various places throughout this specification are not necessarily all referring to the same embodiment. Where reference is made to a numerical value using a term such as, for example, about or substantially, the exact numerical value is also disclosed.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary. In addition, various embodiments and example of the present invention may be referred to herein along with alternatives for the various components thereof. It is understood that such embodiments, examples, and alternatives are not to be construed as de facto equivalents of one another, but are to be considered as separate and autonomous representations of the present invention.

Furthermore, the described features, structures, or characteristics may be combined in any suitable manner in one or more embodiments. In the preceding description, numerous specific details are provided, such as examples of lengths, widths, shapes, etc., to provide a thorough understanding of embodiments of the invention. One skilled in the relevant art will recognize, however, that the invention can be practiced without one or more of the specific details, or with other methods, components, materials, etc. In other instances, well-known structures, materials, or operations are not shown or described in detail to avoid obscuring aspects of the invention.

While the forgoing examples are illustrative of the principles of the present invention in one or more particular applications, it will be apparent to those of ordinary skill in the art that numerous modifications in form, usage and details of implementation can be made without the exercise of inventive faculty, and without departing from the principles and concepts of the invention. Accordingly, it is not intended that the invention be limited, except as by the claims set forth below.

The verbs "to comprise" and "to include" are used in this document as open limitations that neither exclude nor require the existence of also un-recited features. The features recited in depending claims are mutually freely combinable unless otherwise explicitly stated. Furthermore, it is to be understood that the use of "a" or "an", that is, a singular form, throughout this document does not exclude a plurality.

As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

INDUSTRIAL APPLICABILITY

At least some embodiments of the present invention find industrial application in wireless positioning.

ACRONYMS LIST

AMF    access and mobility management function
LMF    location management function

PRS     positioning reference signal
SRS     sounding reference signal
WUS     wake-up signal

REFERENCE SIGNS LIST

| 101 | core network |
| --- | --- |
| 110 | user equipment |
| 130, 135, 137 | base station |
| 130A, 130B, 135A, 135B | cell |
| 140 | core network node |
| 150 | location management function |
| 201, 202 | location service request |
| 210, 215, 217 | transmission |
| 220 | indication of mandatory or non-mandatory request |
| 230 | indication of accuracy requirement |
| 300-370 | structure of the device of FIGURE 3 |
| 410-4110 | phases of the signalling process of FIGURE 4 |
| 510-520 | phases of the method of FIGURE 5 |

**Claims**

1. An apparatus comprising means for :

   - processing, in a location management function, a location service request which requests that a location of a user equipment is determined, wherein the location service request comprises or is provided with at least one of the following indications: whether or not the location service request is conditional, whether or not the location service request is provisional, an accuracy requirement, a priority of the location service request, a user equipment class of the user equipment, a user equipment category of the user equipment, a mobility profile of the user equipment and information on previous location measurements of the user equipment;
   - determining, based at least in part on network energy saving requirements or the at least one indication, positioning reference signal characteristics to be used in the determining of the location of the user equipment, and
   - transmitting a response to the location service request, the response comprising indications on the determined positioning reference signal characteristics.

2. The apparatus according to claim 1, wherein the apparatus comprising means for performing the determining based at least in part on the indication of priority, wherein the apparatus comprising means for determining the positioning reference signal characteristics as such which characterise positioning reference signals which use more physical resources as a response to the indication of priority indicating a priority above a threshold priority, and as such which characterise positioning reference signals which use less physical resources as a response to the indication of priority indicating a priority below the threshold priority.

3. The apparatus according to claim 1 or 2, further comprising means for selecting, based at least in part on the accuracy requirement and on an energy saving requirement, a positioning method to be used in the determining of the location of the user equipment

4. The apparatus according to any of claims 1-3, wherein the location service request comprises the accuracy requirement and the apparatus further comprising means for determining the positioning reference signal characteristics further based on the accuracy requirement.

5. The apparatus according to any of claims 1-4, wherein the apparatus further comprising means for, responsive to determining to initiate the positioning procedure, activating at least one base station from a low-energy state and instructing the activated at least one base station to participate in the positioning procedure.

6. The apparatus according to claim 5, wherein the apparatus further comprising means for selecting the at least one base station to activate from the low-energy state based on the accuracy requirement and the network energy saving requirements.

7. The apparatus according to any of claims 1-6, wherein the response further comprises an indication of a preferred positioning method to use in the determination of the location of the user equipment.

8. An apparatus comprising at least one processing core and at least one memory storing instructions that, when executed by the at least one processing core, cause the apparatus at least to:

   - transmit, to a location management function, a location service request which requests that a location of a user equipment is determined, wherein the location service request comprises or is provided with at least one of the following indications: whether or not the location service request is conditional, an accuracy requirement for the determination of the location of the user equipment, a priority of the location service request, a user equipment class of the user equipment, a user equipment category of the user equipment, a mobility profile of the user equipment and information on previous location measurements of the user equipment;
   - receive a response to the location service request, the response comprising indications on positioning reference signal characteristics;
   - determine positioning resources to be used based at least in part on the received positioning reference signal characteristics, and
   - participate in the determining of the location of the user equipment based on the determined positioning resources.

9. A method, comprising:

   - processing, in a location management function, a location service request which requests that a location of a user equipment is determined, wherein the location service request comprises or is provided with at least one of the following indications: whether or not the location service request is conditional, whether or not the location service request is provisional, an accuracy requirement, a priority of the location service request, a user equipment class of the user equipment, a user equipment category of the user equipment, a mobility profile of the user equipment and information on previous location measurements of the user equipment;
   - determining, based at least in part on network energy saving requirements or the at least one indication, positioning reference signal characteristics to be used in the determining of the location of the user equipment, and
   - transmitting a response to the location service request, the response comprising indications on the determined positioning reference signal characteristics.

10. The method according to claim 9, wherein the method comprises performing the determining based at least in part on the indication of priority, wherein the apparatus is configured to determine the positioning reference signal characteristics as such which characterise positioning reference signals which use more physical resources as a response to the indication of priority indicating a priority above a threshold priority, and as such which characterise positioning reference signals which use less physical resources as a response to the indication of priority indicating a priority below the threshold priority.

11. The method according to any of claims 9-10, wherein the location service request comprises the accuracy requirement and the method further comprises determining the positioning reference signal characteristics further based on the accuracy requirement.

12. The method according to any of claims 9 - 11, wherein the method comprises, responsive to determining to initiate the positioning procedure, activating at least one base station from a low-energy state and instructing the activated at least one base station to participate in the positioning procedure.

13. The method according to claim 12, wherein the method comprises selecting the at least one base station to activate from the low-energy state based on the accuracy requirement and the network energy saving requirements.

14. The method according to any of claims 9 - 13, wherein the response further comprises an indication of a preferred positioning method to use in the determination of the location of the user equipment.

15. A non-transitory computer readable medium having stored thereon a set of computer readable instructions that, when executed by at least one processor, cause an apparatus to at least:

   - process, in a location management function, a location service request which requests that a location of a user equipment is determined, wherein the location service request comprises or is provided with at least one of the following indications: whether or not the location service request is conditional, whether or not the location service request is provisional, an accuracy requirement, a priority of the location service request, a user equipment class of the user equipment, a user equipment category of the user equipment, a mobility profile of the user equipment and information on previous location measurements of the user equipment;
   - determine, based at least in part on network energy saving requirements or the at least one indication, positioning reference signal characteristics to be used in the determining of the location of the user equipment, and
   - transmit a response to the location service request, the response comprising indications on the determined positioning reference signal characteristics.

FIGURE 1

130 210 215 135

110 217 137

# FIGURE 2A

201

220

# FIGURE 2B

202

230 220

# FIGURE 2C

FIGURE 3

FIGURE 4

Providing, from an apparatus, to a NW, a location service request which requests that a location of the apparatus is determined by the NW, wherein the location service request comprises or is provided with at least one of the following indications: whether or not the location service request is conditional, an accuracy requirement for the determination of the location of the apparatus, a priority of the location service request, a UE class of the apparatus, a UE category of the apparatus, a mobility profile of the apparatus and information on previous location measurements of the apparatus

510

Processing a response to the location service request, received in the apparatus from the network, the response indicating resources for communicating PRS with plural base stations of the NW

520

# FIGURE 5

Processing, in an LMF, a location service request which requests that a location of a UE is determined, wherein the location service request comprises or is provided with at least one of the following indications: whether or not the location service request is conditional, whether or not the location service request is provisional, an accuracy requirement, a priority of the location service request, a UE class of the UE, a UE category of the UE, a mobility profile of the UE and information on previous location measurements of the UE

610

Determining, based at least in part on network energy saving requirements of the at least one indication, PRS characteristics to be used in the determining of the location of the UE

620

Transmitting a response to the location service request, the response comprising indications on the determined PRS characteristics

630

# FIGURE 6

Receiving, from a UE, a location service request which requests that a location of the UE is determined, wherein the location service request comprises or is provided with at least one of the following indications: whether or not the location service request is conditional, an accuracy requirement, a priority of the location service request, a UE class of the UE, a UE category of the UE, a mobility profile of the UE and information on previous location measurements of the UE

710

Determining whether the location service request is of a provisional type

720

Transmitting the location service request to a LMF, the transmitted location service request comprising an indication of whether the transmitted location service request is of the provisional type

730

# FIGURE 7

Transmitting, to an LMF, a location service request which requests that a location of a UE is determined, wherein the location service request comprises or is provided with at least one of the following indications: whether or not the location service request is conditional, an accuracy requirement for the determination of the location of the UE, a priority of the location service request, a UE class of the UE, a UE category of the UE, a mobility profile of the UE and information on previous location measurements of the UE

810

Receiving a response to the location service request, the response comprising indications on PRS characteristics

820

Determining positioning resources to be used based at least in part on the received PRS characteristics

830

Participating in the determination of the location of the UE based onthe determined positioning resources

840

# FIGURE 8

Europäisches
Patentamt

European
Patent Office

Office européen
des brevets

# EUROPEAN SEARCH REPORT

**Application Number**

EP 24 21 8723

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/296718 A1 (KUMAR AKASH [IN] ET AL) 21 September 2023 (2023-09-21)<br>* abstract *<br>* paragraph [0036] - paragraph [0040] *<br>* paragraph [0118] - paragraph [0146] *<br>----- | 1-14 | INV.<br>H04L67/52<br>H04W64/00<br>H04W72/00<br><br>ADD.<br>H04L67/50 |
| X | US 2022/357418 A1 (WANG YUANYUAN [CN] ET AL) 10 November 2022 (2022-11-10)<br>* abstract *<br>* paragraph [0163] - paragraph [0193] *<br>* paragraph [0260] - paragraph [0393] *<br>----- | 1-15 | |
| A | WO 2023/209208 A1 (ERICSSON TELEFON AB L M [SE]) 2 November 2023 (2023-11-02)<br>* abstract *<br>* page 1, line 5 - page 12, line 28 *<br>----- | 1-15 | |

|  |
|---|
| **TECHNICAL FIELDS SEARCHED (IPC)** |
| H04L<br>H04W |

The present search report has been drawn up for all claims

| Place of search | Date of completion of the search | Examiner |
|---|---|---|
| The Hague | 8 April 2025 | Aura Marcos, F |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 24 21 8723

This annex lists the patent family members relating to the patent documents cited in the above-mentioned European search report.
The members are as contained in the European Patent Office EDP file on
The European Patent Office is in no way liable for these particulars which are merely given for the purpose of information.

08-04-2025

| Patent document cited in search report | Publication date | Patent family member(s) | Publication date |
|---|---|---|---|
| US 2023296718 A1 | 21-09-2023 | CN 116018526 A | 25-04-2023 |
| | | EP 4214977 A1 | 26-07-2023 |
| | | KR 20230067611 A | 16-05-2023 |
| | | US 2023296718 A1 | 21-09-2023 |
| | | WO 2022060493 A1 | 24-03-2022 |
| US 2022357418 A1 | 10-11-2022 | BR 112022014791 A2 | 20-09-2022 |
| | | CN 113301495 A | 24-08-2021 |
| | | EP 4102860 A1 | 14-12-2022 |
| | | JP 7577123 B2 | 01-11-2024 |
| | | JP 2023513881 A | 04-04-2023 |
| | | KR 20220137069 A | 11-10-2022 |
| | | PH 12022551967 A1 | 02-10-2023 |
| | | US 2022357418 A1 | 10-11-2022 |
| | | WO 2021155793 A1 | 12-08-2021 |
| WO 2023209208 A1 | 02-11-2023 | EP 4515993 A1 | 05-03-2025 |
| | | WO 2023209208 A1 | 02-11-2023 |

For more details about this annex : see Official Journal of the European Patent Office, No. 12/82